(19) Europäisches Patentamt
European Patent Office
Office européen des brevets

(11) EP 0 787 368 B1

(12) **EUROPÄISCHE PATENTSCHRIFT**

(45) Veröffentlichungstag und Bekanntmachung des Hinweises auf die Patenterteilung:
**02.06.1999 Patentblatt 1999/22**

(21) Anmeldenummer: **95935896.1**

(22) Anmeldetag: **04.10.1995**

(51) Int Cl.[6]: **H01M 8/10**, C25B 9/00

(86) Internationale Anmeldenummer:
**PCT/EP95/03907**

(87) Internationale Veröffentlichungsnummer:
**WO 96/13073 (02.05.1996 Gazette 1996/20)**

(54) **METALLISIERTE KATIONENAUSTAUSCHER-MEMBRAN**
METALLIZED CATION EXCHANGER MEMBRANE
MEMBRANE METALLISEE ECHANGEUSE DE CATIONS

(84) Benannte Vertragsstaaten:
**DE FR GB IT**

(30) Priorität: **20.10.1994 DE 4437492**
**29.12.1994 DE 4447126**

(43) Veröffentlichungstag der Anmeldung:
**06.08.1997 Patentblatt 1997/32**

(73) Patentinhaber: **HOECHST AKTIENGESELLSCHAFT**
**65929 Frankfurt am Main (DE)**

(72) Erfinder:
- **MERTESDORF, Petra**
**D-79189 Bad Krotzingen (DE)**
- **SCHNELLER, Arnold**
**D-64409 Messel (DE)**
- **WAGENER, Reinhard**
**D-65439 Flörsheim (DE)**
- **WITTELER, Helmut**
**D-65929 Frankturt (DE)**

(56) Entgegenhaltungen:
**EP-A- 0 050 373**
**EP-A- 0 309 337**
**GB-A- 1 013 703**
**GB-A- 2 071 152**
**US-A- 4 328 086**

- **JOURNAL OF MEMBRANE SCIENCE, Bd. 73 , Nr. 1, 2.Oktober 1992 AMSTERDAM NL, Seiten 87-97, RUDOLF HOLZE ET AL 'Advances in the use of perfluorinated cation exchange membranes in integrated water electrolysis and hydrogen/oxygen fuel cell systems'**
- **JOURNAL OF THE ELECTROCHEMICAL SOCIETY, Bd. 136, Nr. 3, März 1989 MANCHESTER, NEW HAMPSHIRE US, Seiten 899-900, PETER S FEDKIW ET AL 'An Impregnation-Reduction Method to Prepare Electrodes on Nafion SPE'**
- **PATENT ABSTRACTS OF JAPAN vol. 006 no. 127 (C-113) ,13.Juli 1982 & JP,A,57 054288 (TOKUYAMA SODA CO LTD) 31.März 1982,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Kationenaustauscher-Membrane, auf deren Oberflächen feinverteilte katalytisch wirksame Metalle aufgebracht sind, Verfahren zu ihrer Herstellung aus organischen, polymeren Kationenaustauscher-Materialien und ihre Verwendung.

Protonenaustauscher-Membranen mit einer oberflächlichen, dünnen Metallbeschichtung lassen sich in Brennstoffzellen verwenden. Dabei dient das Metall, z.B. Platin, als Katalysator für die in der Brennstoffzelle ablaufenden Reaktionen (Ullmann's Encyclopedia of Industrial Chemistry, 5th Ed., Vol. A 12, p. 79). Protonenaustauscher-Membranen mit einer oberflächlichen dünnen Metallbeschichtung lassen sich auch in Elektrolysezellen, z.B. für die Elektrolyse von Wasser einsetzen. Neben reinen Metallen werden auch Mischungen oder Legierungen von Metallen und Verbunde von kalytisch aktiven Metallen mit Kohlenstoff oder anderen elektrisch leitfähigen Materialien eingesetzt.

Aus GB 1 137 127 ist ein Verfahren zur Herstellung von Elektroden für Brennstoffzellen bekannt, bei dem man ein durchgängig poröses, nichtmetallisches Substrat, zum Beispiel aus Kunststoff, mit einem Reduktionsmittel belädt und anschließend mit einer Lösung eines leicht reduzierbaren Metalles, zum Beispiel Palladiumchlorid, Goldcyan oder Chloro-Platinsäure, behandelt, um die Oberfläche des Substrats zu metallisieren. Anschließend wird die erzeugte Metallschicht elektrisch verstärkt. Die genannten porösen Substrate sind in Brennstoffzellen aber nur zusammen mit einem flüssigen Elektrolyt verwendbar. Eine Verwendung in Festelektrolytbrennstoffzellen ist nicht möglich.

Aus der japanischen Offenlegungsschrift 58-176 222 ist ein Verfahren zur Metallisierung einer Kationenaustauscher-Membran bekannt, bei dem man eine Folie aus einem perfluorierten, aliphatischen Polymer mit Sulfonsäuregruppen mit einem Reduktionsmittel, zum Beispiel Natriumboranat, imprägniert und danach mit der Lösung eines Metallsalzes behandelt, das negative Metallkomplexionen bildet, z.B. $H_2PtCl_6$. Das Metallsalz wird dabei zum Metall reduziert und die Membranoberfläche metallisiert. Als Verwendungsmöglichkeiten für die Membrane werden Elektrolyse-Verfahren, z.B. Chloralkali-Elektrolyse angegeben.

Wie die Anmelderin gefunden hat, läßt es sich dabei nicht vermeiden, daß während des Reduktionsvorganges immer Reduktionsmittel von der Membran weg in die Lösung des zu reduzierenden Metallsalzes diffundiert. Auch in der Lösung bildet sich dann Metall, das sich jedoch nicht auf der Membran abscheidet. Dieser Metallverlust verringert die Wirtschaftlichkeit des Verfahrens.

In anderen Verfahren diffundiert ein Reduktionsmittel aus einer ersten Kammer durch eine Ionenaustauscher-Folie, deren andere Seite mit einer Lösung von Hexachlorplatinsäure in einer zweiten Kammer kontaktiert ist, so daß sich oberflächlich Platin abscheidet (R. Liu, W.H. Her, P.S. Fedkiw, J. Electrochem Soc. 139, 15-23 (1992)). Abgesehen von dem hohen Aufwand dieses Verfahrens ist als weiterer Nachteil festzustellen, daß sich unter der Wirkung des durch die Membran diffundierenden Reduktionsmittels auch in tiefer gelegenen Schichten der Membran das eigentlich nur in der Nähe der Membranoberfläche benötigte Metall bildet. Dieser Teil des durch Reduktion erzeugten Metalls kommt in einer Brennstoffzelle nicht mit den Brenngasen in Kontakt und kann daher keine katalytische Wirksamkeit entfalten. Auch dieses Verfahren stellt also den Katalysator nicht allein dort zur Verfügung, wo er die Funktion einer Brennstoffzelle günstig beeinflußt. Die Bedeutung der Lokalisierung des Platins an der Membranoberfläche ist bereits von E.A. Ticianelli, C.R. Derouin und S. Srinivasan (J. Electroanal. Chem. 251, 275-295 (1988)) gezeigt worden.

In den obengenannten Veröffentlichungen besteht das Material der Kationenaustauscher-Membranen aus Polymeren mit perfluorierten Kohlenstoff-Hauptketten, die lateral mit ionischen Gruppen, zumeist Sulfonsäuregruppen verknüpft sind. Die Beständigkeit dieser Polymeren (z.B. gegen Chlor und Alkalien) ist hoch, aber für den Einsatz in Brennstoffzellen nicht in vollem Umfang erforderlich. Nachteilig sind auch ihr hoher Preis und die Schwierigkeit, die kommerziell erhältlichen Membranen zu verarbeiten.

Aus der EP-A 0 574 791 ist ein Verfahren bekannt, bei dem man die Lösung eines sulfonierten Polyetherketons in Dimethylformamid zu einer Folie verarbeitet und in die Oberfläche der Folie Platin-Partikel einpreßt. Die Zellspannung der erhaltenen metallisierten Membran in einer Wasserstoff/Sauerstoff-Brennstoffzelle betrug 700 mV und die Stromdichte 175 $mA/cm^2$.

Aus der DE-A 4 241 150 ist ein Elektrodenmembran-Verbund bekannt, in dem als Membranmaterial ein lösliches Kationenaustauscher-Polymer zur Anwendung kommt. Das Elektrodenmaterial dieses Verbundes ist porös. Es wird durch Treibmittel porös gemacht. Bei diesem Verfahren ist es unvermeidbar, daß ein Teil des Katalysatormaterials irreversibel mit Kationenaustauscher-Polymer bedeckt bleibt und deshalb nicht seine volle katalytische Wirksamkeit entfalten kann. Außerdem führt die Verwendung von Treibmitteln auch zur Bildung von geschlossenen Poren, die keinen Beitrag zur spezifischen Oberfläche der Elektrode leisten.

Ferner sind aus dem Stand der Technik, der die reduktive Abscheidung einer katalytischen Metallelektrode in Form feinverteilter Teilchen auf einer porösen Membran vorsieht, folgende Methoden zur Membranporenbildung beschrieben worden:

a.) die Glasplasma-Aufrauhung der Membran (US-A-4,328,086),
b.) die mechanische Aufrauhung (GB-A-2 071 152),
c.) das Einschliessen von reduktiv gebildeten Katalysatorpartikeln in einer gequollenen Membran oder

in einer Membran, die aus einer Mischung gelösten Ionentauschers und eines Salzes des Katalysators nach Auftragen der Lösung auf ein Substrat hergestellt wird (EP-A-0 309 337)

oder

d.) das chemische Anätzen einer Membran durch ein geeignetes organisches Salz (JP-A-57/054288).

Wie die Optimierung von Elektrodenstrukturen für Hochtemperatur-Brennstoffzellen mit oxidischen Elektroyten ergab, ist eine möglichst große Anzahl von Dreiphasengrenzen für die Erhöhung des Wirkungsgrades einer Brennstoffzelle wichtig, weil vornehmlich in der Nähe der Dreiphasengrenzen die gewünschten elektrochemischen Reaktionen ablaufen. Dreiphasengrenzen sind die Stellen im Elektrolyt-Elektroden-Verbund, an denen Elektrolyt, Katalysator und Brenngas zusammentreffen (F. P. F. van Berkel, F. H. van Heuveln, J. P. P. Huijsmans, Solid State Ionics 72, 240 - 247 (1994)). Die Dreiphasengrenze für eine Brennstoffzelle zu erhöhen, bedeutet gleichzeitig die spezifische Grenzflächen Katalysator/Brenngas und Katalysator/Elektrolyt zu erhöhen.

Es bestand daher die Aufgabe eine Membran-Elektroden-Einheit herzustellen, die möglichst große spezifische Grenzflächen Katalysator/Brenngas und Katalysator/Elektrolyt besitzt. Ferner bestand die Aufgabe, ein einfaches Verfahren zur Herstellung derartiger Membran-Elektroden-Einheiten anzugeben.

Die vorliegende Erfindung löst diese Aufgabe durch einen Membran-Elektroden-Verbund gemäß Anspruch 1, dessen nähere Ausgestaltungen in den Ansprüchen 2 bis 14 dargestellt sind.

Katalytisch wirksame Metalle im Rahmen der Erfindung sind die Metalle, die die Bildung von Wasser aus Wasserstoff und Sauerstoff katalysieren oder die die Oxidation von Methanol und anderen Kohlenstoffverbindungen katalysieren. Insbesondere handelt es sich um Platin und um Metalle der Platingruppe (Ruthenium, Rhodium, Palladium, Osmium, Iridium) sowie um Eisen, Kobalt, Nickel, Kupfer, Silber und Gold. Katalytisch wirksame Metalle im Rahmen der Erfindung sind ferner Mischungen oder Legierungen dieser Metalle, insbesondere Platin/Ruthenium und Platin/Ruthenium/Zinn.

Es wurde nun ein Membran-Elektroden-Verbund gefunden, der eine Membran umfaßt, die einen polymeren, in einem Lösungsmittel löslichen Kationenaustauscher mit Carbonsäure-, Phosphonsäure- oder Sulfonsäuregruppen (im folgenden Kationenaustauscher-Polymer genannt) enthält und auf der mindestens auf einer Seite in fein verteilter Form katalytisch aktive Metalle aufgebracht sind. Diese Membran ist durch eine offenporige Deckschicht gekennzeichnet, die mit Metall bedeckt ist.

Nach einer bevorzugten Ausgestaltung der Erfindung ist das Kationenaustauscher-Polymer in einem aprotisch-polaren Lösungsmittel löslich und enthält Einheiten der allgemeinen Formeln:

$$[Ar^1X] \text{ und } [Ar^2Y],$$

die mindestens teilweise durch Sulfonsäuregruppen substituiert sind, wobei $Ar^1$ und $Ar^2$ gleiche oder verschiedene 2-wertige Arylenreste, X Sauerstoff oder Schwefel und Y den Carbonyl-, Sulfoxid- oder Sulfonylrest bedeuten. Ein Polymer kann auch mehrere unterschiedliche Einheiten der Formel $[Ar^1X]$ und mehrere unterschiedliche Einheiten der Formel $[Ar^2Y]$ aufweisen.

Die Arylenreste $Ar^1$ und $Ar^2$ stellen zweiwertige aromatische Einheiten dar, beispielsweise den Phenylen-, Biphenylen-, Naphthylen- oder Anthrylenrest. Vorzugsweise steht $Ar^1$ und $Ar^2$ für den Phenylen-Rest, insbesondere den 1,4-Phenylen-Rest. Bevorzugte Polymere sind aromatische Polyetherketone, beispielsweise der Formeln

$$[\text{-O-Ar-O-Ar-CO-Ar-}] \quad (I)$$

und

$$[\text{O-Ar-O-Ar-CO-Ar-CO-Ar}] \quad (II),$$

Ethersulfone, beispielsweise der Formeln

$$[\text{-O-Ar-}SO_2\text{-Ar-}] \quad (III)$$

und

$$[\text{-O-Ar-}SO_2\text{-Ar-O-Ar-}C(CH_3)_2\text{-Ar-}] \quad (IV),$$

wobei Ar für Phenylen steht.

Zusätzlich zu den Einheiten der Formel $[Ar^1X]$ und $[Ar^2Y]$ kann das Polymer auch zweiwertige Reste der Formeln $Ar^3$-$C(CH_3)_2$-, $Ar^3$-$C(CF_3)_2$-, $Ar^3$-C-(Phenyl)$_2$- oder den Rest $Ar^3$-CyClohexylen oder den Rest $Ar^3$-Fluoren enthalten, wobei $Ar^3$ eine zweiwertige aromatische Einheit bedeutet.

Anstelle der erfindungsgemäß eingesetzten sulfonierten Polymere, die die Gruppen $[Ar^1X]$ und $[Ar^2Y]$ enthalten, kann man auch sulfonierte Polyarylthioether, insbesondere Polyphenylensulfid, oder sulfoniertes Polybenzimidazol einsetzen.

Ferner kann das Polymer des Kationenaustauschermaterials auch zweiwertige N,N'-Pyromeilitsäure-Reste der Formel

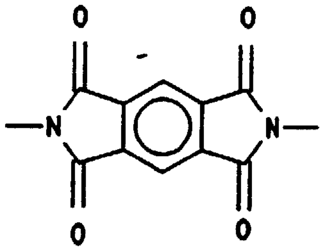

Phthalsäureimid-Reste der Formel

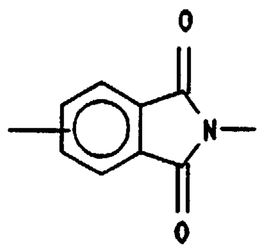

und/oder Benzimidazol-Reste der Formel

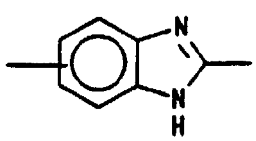

enthalten.

Die Herstellung der Polymere, der sulfonierten Polymere und die Herstellung von Membranen aus diesen Polymeren ist aus der Literatur bekannt (EP-A 0 008 895; EP-A 0 575 807; DE-A 4 242 692; R. Nolte, K. Ledjeff, M. Bauer, R. Mühlhaupt, J. Membrane Sci. 83, 211-220 (1993); B.C. Johnson et al., J. Polym. Sci. Polym. Chem. Ed., 22, 721-737; A. Noshay, L.M., Robeson, J. Appl. Polym. Sci. 20, 1885-1903 (1976), Comprehensive Polymer Science 5, 6 (1989), M.B. Gieselmann, J.R. Reynolds, Macromolecules 26, 5633-5642 (1993); Houben-Weyl 9 (1955).

Ferner können Mischungen dieser sulfonierten Polymere untereinander sowie Mischungen der sulfonierten Polymeren mit anderen Polymeren verwendet werden, die vorzugsweise ebenfalls in aprotisch-polaren Lösungsmitteln löslich sind.

Weitere polymere Kationenaustauscher-Materialien mit Carbonsäure-, Phosphonsäure- oder Sulfonsäuregruppen, die sich zur Herstellung einer erfindungsgemäßen Kationenaustauschermembran eignen, sind in der DE-PS 4 241 1 50 erwähnt, auf die hiermit ausdrücklich Bezug genommen wird.

Zur Herstellung einer erfindungsgemäßen platinierten Kationenaustauscher-Membran behandelt man eine Membran aus einem der obengenannten organischen Kationenaustauscherpolymere, das in einem aprotisch-polaren Lösungsmittel löslich ist, beidseitig mit der Lösung eines Reduktionsmittels für $H_2PtCl_6$, befreit die Oberfläche durch Spülen von anhaftenden Reduktionsmittel und verbringt dann die Membran in eine Lösung von $H_2PtCl_6$, so daß sich an der Oberfläche der Membran Platin abscheidet.

Vorzugsweise soll die auf der Oberfläche der Membran aufgebrachte Menge an Platinmetall 0,001 bis 2 mg pro $cm^2$ der Membran betragen. Die mit der porösen Oberfläche zu versehende Membran kann durch Vergießen einer Lösung des Kationenaustauschermaterials in einem Lösungsmittel auf einer ebenen Unterlage und anschließendes Trocknen erhalten werden.

Die Ionenaustauscherkapazität der zu metallisierenden Membran beträgt vorzugsweise 0,2 bis 3 mmol $H^{\oplus}$/g.

Die eingesetzte Membran wird vor der Beschichtung mit katalytisch aktivem Metall in einem Phaseninversions-Verfahren mit einer porösen Oberfläche versehen. Beispiele für Phaseninversions-Verfahren sind in der EP-A 0 501 425, der EP-A 0 604 882 und der EP-A 0 604 883 beschrieben. Das Phaseninversions-Verfahren wird in einer besonderen, erfindungsgemäßen Ausgestaltung durchgeführt, die dazu führt, daß die Membran nicht durchgängig, sondern nur oberflächlich porös ist. Dazu kann man die Membran zunächst mit einem Lösemittel anlösen und dann mit einer Flüssigkeit behandeln, die mit dem Lösemittel mischbar ist, jedoch ein Nicht-Lösemittel für das Membranmaterial darstellt. Hinsichtlich der Auswahl des Lösemittels und des Nicht-Lösemittels wird ausdrücklich auf die EP-A 0 604 882 Bezug genommen. Vorzugsweise ist das Lösungsmittel für das Membranmaterial ein aprotisch-polares Lösungsmittel, beispielsweise Dimethylformamid, Dimethylsulfoxid, Dimethylacetamid oder N-Methylpyrrolidon. Nichtlösungsmittel sind vorzugsweise Wasser oder aliphatische Alkohole, Mischungen von Wasser mit aliphatischen Alkoholen oder Mischungen der vorstehend genannten Nichtlösungsmittel mit aprotisch-polaren Lösungsmitteln.

Da man bei dem Phaseninversionsverfahren ohne Treibmittel arbeitet, bilden sich keine geschlossenen Poren.

Die poröse oberflächliche Schicht ist 1 bis 100 µm, insbesondere 30 bis 50 µm dick und weist überwiegend Poren mit einem Durchmesser von 0,1 µm bis 10 µm auf. Die Gesamtdicke der Membran beträgt vorzugsweise 70 bis 700 µm.

Um die Beschichtung mit Platin herbeizuführen, kann man auch die Reihenfolge des Einwirkens von Reduktionsmittel und Hexachloroplatinat-Lösung umkehren, d.h. man kann zunächst die Folie mit poröser Oberfläche mit einer Lösung von $H_2PtCl_6$ behandeln, dann die Oberfläche der Folie durch Spülen von oberflächlich anhaftender Hexachloroplatinsäure befreien

und dann auf die Folie ein Reduktionsmittel für $H_2PtCl_6$ einwirken lassen, so daß sich an der Oberfläche beidseitig metallisches Platin abscheidet.

Man kann auch solche Folien metallisieren, bei denen das Material des Kationenaustauschers nicht in der H-Form vorliegt, sondern die Sulfonsäuregruppen als Kalium-, Rubidium-, Cäsium- oder Ammoniumsalz vorliegen. Auch Folien aus diesem Material lassen sich mit poröser Oberfläche gewinnen. Jedoch lassen sich hier auch glatte Membranen gut einsetzen. Sie ergeben nach der Metallisierung ebenfalls wertvolle Membran-Elektroden-Verbunde. Für die Metallisierung macht man vorteilhafterweise von der Schwerlöslichkeit der entsprechenden Salze der Hexachloroplatinsäure Gebrauch.

Durch Behandlung mit einer $H_2PtCl_6$-Lösung (Lösungsmittel sind z.B. Wasser,Alkohole, Ether mit einer Konzentration von 0,05 % bis 5 %, insbesondere 0,5 % bis 1 %) scheidet sich auf der Oberfläche einer solchen Membran zunächst ein festhaftendes schwerlösliches Salz der $H_2PtCl_6$ ab, das nach Einwirken eines Reduktionsmittels in festhaftendes Platin übergeht.

Als Reduktionsmittel für $H_2PtCl_6$ und seine Salze dienen insbesondere Natriumformiat, Natriumboranat, Zinn(II)chlorid und Hydrazinhydrochlorid. Ferner können Ameisensäure, Formaldehyd, Lithiumboranat, Lithiumaluminiumhydrid, Hydrazin, Phosphinsäure ($H_3PO_2$) und ihre Alkalimetallsalze sowie Phosphonsäure ($H_3PO_3$) und ihre Alkalimetallsalze eingesetzt werden. Anstatt die Membran nach Behandlung mit $H_2PtCl_6$ in die Lösung eines Reduktionsmittels einzutauchen, können $H_2PtCl_6$ und seine Salze auch im Wasserstoffstrom bei Temperaturen zwischen 120°C und 200°C zum Metall reduziert werden. Das Reduktionsmittel liegt vorzugsweise in Konzentrationen zwischen 1 % und 30 % in Lösungsmitteln wie Wasser, niederen Alkoholen oder Ethern vor; insbesondere werden Natriumformiat (10 % in Wasser), Natriumboranat (5 % in Methanol), Zinn(II)chlorid (5 % in Ethanol) und Hydrazinhydrochlorid (10 % in Wasser) eingesetzt. Es können auch Mischungen von Reduktionsmitteln verwendet werden. Beispielsweise kann man durch Zugabe von metallischem Zinn zu $SnCl_2$, das gemäß der Gleichung

$$2\,Sn^{2+} + Pt^{4+} \rightarrow 2Sn^{4+} + Pt^{0}$$

verbrauchte Zinn(II)
nach

$$Sn^{4+} + Sn^{0} \rightarrow 2\,Sn^{2+}$$

regenerieren.

Nach Durchführung der Metallisierung/Platinierung kann man in an sich bekannter Weise die Metallsulfonate in die freien Sulfonsäuregruppen zurückverwandeln. In bestimmten Fällen kann diese Umwandlung auch erst während der technischen Anwendung erfolgen.

Um eine Membran aus einem organischen Kationenaustauscher-Polymer zu erhalten, bei dem die Sulfonatgruppen in der Salzform vorliegen, gibt es mehrere Verfahren. Am einfachsten behandelt man eine ggfs. mit poröser Oberfläche versehene Membran aus einem organischen Kationenaustauscher-Polymer mit freien Sulfonsäuregruppen mit der wäßrigen Lösung eines Kalium-, Rubidium-, Cäsium- oder Ammoniumsalzes, beispielsweise der Lösung eines Chlorids, Bromids, Orthophosphats und Acetats, oder des entsprechenden Hydroxyds und überführt dabei das Austauschermaterial in die Kalium-, Rubidium-, Cäsium- bzw. Ammonium-Form.

Gemäß einer anderen Variante geht man so vor, daß man ein Kationenaustauscher-Polymer mit Sulfonsäuregruppen in einem aprotisch polaren Lösungsmittel auflöst und die erhaltene Lösung in eine wäßrige Lösung eines Kalium-, Rubidium-, Cäsium- oder Ammoniumsalzes tropft, man den sich bildenden Niederschlag des Kationenaustauschermaterials in der Salzform isoliert und in einem aprotisch polaren Lösungsmittel auflöst, man einen Film der erhaltenen Lösung auf einer ebenen Unterlage gießt und diesen Film zu einer Folie trocknen läßt. Nach einer anderen Variante fügt man beim Gießen einer Membran aus Kationenaustauschermaterial mit Sulfonsäuregruppen der Gießmasse bereits entsprechende Salze, z.B. Ammoniumacetat, hinzu.

Schließlich kann man eine Membran aus Kationenaustauscher-Polymer mit Sulfonsäuregruppen durch ein Lösungsmittel anlösen und dann die Folie mit einer Flüssigkeit behandeln, die mit dem Lösungsmittel mischbar ist, die jedoch ein Nicht-Lösungsmittel für das Membranmaterial darstellt, um eine poröse Oberfläche zu erzielen und gleichzeitig das Lösungsmittel zu entfernen. Dann wird der erhaltene Film mit der wäßrigen Lösung eines Kalium-, Rubidium-, Cäsium- oder Ammoniumsalzes behandelt. Zur Vereinfachung kann man diese Salze aber bereits in dem hier genannten Lösemittel oder Nicht-Lösemittel für das Kationenaustauscher-Polymer lösen, d.h. die Beladung der Membran mit Kationen gleichzeitig mit der Schaffung einer porösen Oberfläche vornehmen.

Experimente haben gezeigt, daß durch das Anlösen und Wiederausfällen des Kationenaustauscher-Polymers ("Phaseninversions-Verfahren") eine poröse Oberflächenstruktur geschaffen wird, bei der die Metalle nach der Beschichtung besonders gut haften.

Das Verfahren zur Herstellung einer porösen Oberfläche der Membran ist auch dann sinnvoll, wenn man nicht vorhat, die Sulfonsäure-Gruppen in die Salzform zu überführen. Beispielsweise kann man auf eine Membran aus dem organischen Kationenaustauschermaterial mit Carbonsäuregruppen, Phosphonsäuregruppen oder Sulfonsäuregruppen ein aprotisch-polares Lösungsmittel, gegebenenfalls in Mischung mit etwas Wasser (um die Lösewirkung zu begrenzen), einwirken lassen, so daß die Oberfläche angelöst wird und anschließend mit einem damit mischbaren Nicht-Lösungsmittel für das Membranmaterial (Beispiel: Wasser, Ethanol, Ethylenglykol) spülen oder besprühen, und so eine zerklüftete und poröse Oberfläche der Folie erhalten und auf dieser dann in der beschriebenen Weise Metalle, insbesondere Platin, abscheiden. Man kann vor der Metallisierung die Membran trocknen, z.B. an Luft oder durch Verdrängen des polaren Nicht-Lösemittelsmittels schrittweisen Eintauchens in verschiedene Lösungsmittel mit abnehmender Polarität. Die Abscheidung des Metalls erfolgt auf einer festen Unterlage. Sie ist nur an Stellen möglich, die von außen zugänglich sind. Daher kommt es weder zu einer teilweisen noch vollständigen Umhüllung der Metallatome durch Polymer.

Die zu metallisierende Membran muß nicht homogen aufgebaut sein. Beispielsweise kann man eine (nicht-metallisierte) Membran, bestehend aus einem ersten sulfonierten Polymer mit einer Lösung eines zweiten sulfonierten Polymers beschichten, das Einheiten der Formel [$Ar^3X$] und [$Ar^4Y$] enthält, wobei $Ar^3$ und $Ar^4$ gleiche oder verschiedene zweiwertige Arylenreste, die mindestens teilweise Sulfonsäuregruppen aufweisen, X Sauerstoff oder Schwefel und Y die Carbonyl-, Sulfoxid- oder Sulfonylgruppe bedeutet, und anschließend die Folienoberfläche mit einer Flüssigkeit behandeln, in der das zweite sulfonierte Polymer unlöslich ist, die aber mischbar mit dem Lösungsmittel dieses Polymers ist, so daß eine Membran aus einem ersten sulfonierten Polymer entsteht, die mit einer Beschichtung aus einem zweiten sulfonierten Polymer überzogen ist, deren Oberfläche zerklüftet ist. Anschließend wird die Folie metallisiert.

Jedoch kann auch das Kationenaustauschermaterial der Membran (= erstes sulfoniertes Polymer) und das zweite sulfonierte Polymer identisch sein. Die Lösung des zweiten sulfonierten Polymers in dem Lösungsmittel kann auch ein nicht-sulfoniertes Polymer enthalten. Dieses Polymer muß nicht löslich sein. Beispielsweise kann durch Zumischen von PTFE der hydrophobe Charakter der porösen Deckschicht gezielt erhöht werden.

Vorzugsweise ist das Lösungsmittel für das Folienmaterial ein aprotisch-polares Lösungsmittel (z. B. Dimethylformamid, Dimethylsulfoxid, Dimethylacetamid oder N-Methylpyrrolidon). Das Nichtlösungsmittel ist vorzugsweise Wasser, gegebenenfalls im Gemisch mit aprotisch-polaren Lösungsmitteln, sowie Alkohol.

Das Kationenaustauschermaterial der Folie kann in Mischung mit einem Polymer ohne anionische Gruppen vorliegen, beispielsweise einem aromatischen Polysulfon, Polyethersulfon oder Polyetherimid.

Ein Teil der Sulfonsäuregruppen des Kationenaustauschermaterials kann in derivatisierter Form vorliegen, z.B. in Form von Sulfonsäurechlorid- und Sulfonsäureamidgruppen.

Die Polymere, die die Membran bilden, können durch energiereiche Strahlung oder Einwirkung geeigneter chemischer Substanzen vernetzt werden.

Vor dem Beschichten der Membran durch Auftragen einer Lösung eines zweiten sulfonierten Polymers kann man die Membran aufrauhen, um die Haftung zu verbessern.

Nach einer weiteren Ausführungsform der Erfindung sind auf der Oberfläche der Folie neben den feinverteilten Metallen auch feinverteilte elektrisch leitfähige Kohlenstoffpartikel, insbesondere Aktivkohle, Ruß oder Graphit, aufgebracht. Auch diese elektrisch leitfähigen Kohlenstoff-Partikel können mit einem Metall beladen sein, das im Sinne der oben angegebenen Erläuterungen katalytisch aktiv ist.

Zur Herstellung einer entsprechenden Kationenaustauscher-Membran führt man wie oben beschrieben ein Phaseninversionsverfahren durch, bei dem eine Kationenaustauscher-Membran mit einer offenporigen Oberfläche erzeugt wird. Während des Phaseninversionsverfahrens trägt man unmittelbar vor dem Einwirken des Nichtlösungsmittels feinverteilten elektrisch leitfähigen Kohlenstoff auf die angelöste Oberfläche der Membran auf, oder man suspendiert diesen in dem Nichtlösungsmittel. Dadurch entsteht eine offenporige Deckschicht, in die Kohlenstoff eingearbeitet ist. Schließlich scheidet man auf der Oberfläche der Membran das katalytisch wirksame Metall nach einem der bereits beschriebenen Verfahren ab.

Die Beschichtung mit elektrisch leitfähigem Kohlenstoff (Ruß, Aktivkohle) verbessert die elektrische Kontaktierung des Katalysators und ermöglicht so den Einsatz in einer Brennstoffzelle. Vorzugsweise besitzen 50 Gew.-% des Kohlenstoffs eine Partikelgröße von kleiner als 16 µm und 25 Gew.-% eine von kleiner als 8 µm. Eine Flächenbelegung der Membran mit 10 $mg/cm^2$ bis 100 $mg/cm^2$ Kohlenstoff (pro Seite) ist bevorzugt.

Der leitfähige Kohlenstoff besteht bei einer Ausführungsform aus Aktivkohle und ist mit Platin, insbesondere mit 5 bis 20 Gew.-% Pt, imprägniert. Mit katalytisch aktiven Metallen, insbesondere Platin, imprägnierter, elektrisch leitfähiger, feinverteilter Kohlenstoff, ist im Handel verfügbar. Dieser Kohlenstoff ist auch in unterschiedlichen Graphitierungsgraden und damit mit unterschiedlichen Leitfähigkeiten erhältlich.

Die erfindungsgemäße metallisierte Membran stellt einen Membran/Elektroden-Verbund dar, der den Brenngasen (beispielsweise $H_2$ und $O_2$) einer Membran-Brennstoffzelle den Zutritt zu einer großen spezifischen Membranoberfläche gestattet. Daraus ergibt sich eine besonders hohe Aktivität des Membran-Elektroden-Verbundes, da die Oberfläche der Membran porös ist und das katalytisch wirksame Metall nicht nur unmittelbar auf der Membranoberfläche sondern auch in den Poren der Oberfläche angeordnet ist. Er eignet sich für den Einsatz in Brennstoffzellen und Elektrolyseuren.

Durch eine nachfolgende zweite Metallisierung, z.B. auf elektrolytischem oder reduktivem Weg, kann die Metallisierung verstärkt werden.

Die Erfindung wird durch die nachfolgend aufgeführten Beispiele näher erläutert.

Beispiel 1

20 g des Sulfonierungsproduktes von Polyaryletherketon II, das gemäß EP-A 0 574 791 hergestellt wurde {Ionenaustauscheräquivalent 1,4 mmol $H^{\oplus}$/g), und 2 g Ammoniumacetat werden in 100 ml N-Methylpyrrolidon (NMP) gelöst. Die Lösung wird auf einer Glasplatte zu einem Film homogener Dicke ausgerakelt und im Umluftofen bei 80°C getrocknet. Der so erhaltene Film ist 100 µm dick. Die Membran wird 30 min bei 20°C in einer Mischung aus 60 % NMP und 40 % Wasser gequollen. Anschließend wird die Membran in Wasser getaucht und dort 30 min belassen. Danach liegt eine mit Ammonium-Ionen beladene Kationenaustauscher Membran vor, die nach rasterelektronenmikroskopischen Studien eine poröse Deckschicht aufweist.

Beispiel 2

20 g des Sulfonierungsproduktes von Beispiel 1 werden in 100 ml NMP gelöst. Die Lösung wird auf einer Glasplatte zu einem Film homogener Dicke ausgerakelt und im Umluftofen bei 80°C getrocknet. Der so erhaltene Film ist 100 µm dick. Die Membran wird mit einer 20 %igen Lösung des eingangs erwähnten Polymers besprüht, so daß eine 100 µm dicke Deckschicht entsteht. Anschließend wird die Membran in eine Mischung aus 70 % Wasser und 30 % NMP getaucht und dort 10 min belassen. Die Membran weist nach rasterelektronenmikroskopischen Studien nun eine poröse Deckschicht auf. Sie wird 2 Stunden in eine 10 %ige Lösung von Natriumformiat in Wasser getaucht, abgespült und für weitere zwei Stunden in eine auf 80°C temperierte Hexachlorplatinsäure-Lösung gebracht. Die Membran verfärbt sich schwarz. Nach Abspülen und Trocknen beträgt die Flächenbeladung mit Platin 40 µg/cm$^2$.

Beispiel 3

20 g des Sulfonierungsproduktes von Beispiel 1 werden in 100 ml NMP gelöst. Die Lösung wird auf einer Glasplatte zu einem Film homogener Dicke ausgerakeit und im Umluftofen bei 80°C getrocknet, anschließend gewässert und erneut getrocknet. Der so erhaltene Film ist 100 µm dick. Er wird nun unter erneuter Verwendung des oben genannten Polymers, das zu 20 % in einer 1,7 %igen Lösung von Ammoniumacetat in NMP gelöst ist, beschichtet und mit leitfähiger Aktivkohle bestreut. Anschließend taucht man für 10 Minuten in Wasser und läßt trocknen. Danach liegt eine mit Ammonium-Ionen beladene Kationenaustauscher-Membran vor, die nach rasterelektronenmikroskopischen Studien eine Deckschicht aufweist, deren Poren zum Teil mit Aktivkohle gefüllt sind. Die Membran wird 1 Minute in eine 0,2 %ige Lösung von $H_2PtCl_6$ in Ethanol getaucht und anschließend mit Ethanol gespült. Die nun mit $(NH_4)_2[PtCl_6]$ beschichtete Membran wird 1 min in eine 10 %ige $NaBH_4$-Suspension in Methanol (35°C) getaucht, in Wasser gespült und getrocknet. Nach Abspülen und Trocknen beträgt die Flächenbeladung mit Platin 400 µg/cm$^2$.

Beispiel 4

16 g des Sulfonierungsproduktes von Polymer II, das gemäß EP-A 0 575 801 hergestellt wurde (Ionenaustauscheräquivalent 1,4 mmol $H^{\oplus}$/g) und 4 g eines Polyethersulfons (®Ultrason E 1 000, Hersteller: BASF AG) werden in 100 ml NMP gelöst. Die Lösung wird auf einer Glasplatte zu einem Film homogener Dicke ausgerakelt und im Umluftofen bei 80°C getrocknet. Der so erhaltene Film ist 100 µm dick. Die Membran wird mit einer 20 %igen Lösung des eingangs erwähnten Polymers besprüht, so daß eine 100 µm dicke Deckschicht entsteht. Anschließend wird die Membran in eine Mischung aus 70 % Wasser und 30 % NMP getaucht und dort 10 min belassen. Die Membran weist nach rasterelektronenmikroskopischen Studien nun eine poröse Deckschicht auf. Sie wird 2 Stunden in eine 10 %ige Lösung von Natriumformiat in Wasser getaucht, abgespült und für weitere zwei Stunden in eine auf 80°C temperierte Hexachlorplatinsäure-Lösung gebracht. Die Membran verfärbt sich schwarz. Nach Abspülen und Trocknen beträgt die Flächenbeladung mit Platin 40 µg/cm$^2$.

Beispiel 5

20 g des Sulfonierungsproduktes von Beispiel 4, das gemäß EP-A 0 575 801 hergestellt wurde (Ionenaustauscheräquivalent 1,4 mmol $H^{\oplus}$/g) werden in 100 ml NMP gelöst. Die Lösung wird auf einer Glasplatte zu einem Film homogener Dicke ausgerakelt und im Umluftofen bei 80°C getrocknet, anschließend gewässert und erneut getrocknet. Der so erhaltene Film ist 100 µm dick. Er wird nun unter erneuter Verwendung des oben genannten Polymers, das zu 20 % in einer 1.7 %igen Lösung von Ammoniumacetat in NMP gelöst ist, beschichtet und mit Platin/Kohle (19.8 Gew.-% Platin, Hersteller: Prototech) bestreut. Anschließend taucht man für 10 Minuten in Wasser und läßt trocknen. Danach liegt eine mit Ammonium-Ionen beladene Kationenaustauscher-Membran vor, die nach rasterelektronenmikroskopischen Studien eine Deckschicht aufweist, deren Poren zum Teil mit Aktivkohle gefüllt sind. Die Membran wird 1 Minute in eine 0,2 %ige Lösung von $H_2PtCl_6$ in Ethanol getaucht und anschließend mit Ethanol gespült. Die nun mit $(NH_4)_2[PtCl_6]$ beschichtete Membran wird über eine Zeitdauer von 1 min in eine 10 %ige

$NaBH_4$-Suspension in Methanol (35°C) getaucht, in Wasser gespült und getrocknet. Nach Abspülen und Trocknen beträgt die Flächenbeladung mit Platin 400 µg/$cm^2$.

Beispiel 6

15 g des Sulfonierungsproduktes von Beispiel 4, das gemäß EP-A 0 575 801 hergestellt wurde (Ionenaustauscheräquivalent 1,4 mmol $H^{\oplus}$/g), werden in 100 ml DMSO gelöst. Diese Lösung wird in eine halb gesättigte Lösung von Kaliumchlorid in Wasser gegeben. Der resultierende Niederschlag wird abgesaugt und getrocknet. Aus dem getrockneten Niederschlag wird eine 20 %ige Lösung in NMP hergestellt, die auf einer Glasplatte zu einem Film homogener Dicke ausgerakelt und im Umluftofen bei 80°C getrocknet wird. Der so erhaltene Film ist 100 µm dick. Die Membran wird 30 Minuten bei 20°C in einer Mischung aus 40 % NMP und 60 % Wasser gequollen. Anschließend wird die Membran in Wasser getaucht und dort 30 min. belassen. Danach liegt eine mit Kalium-Ionen beladene Kationenaustauscher-Membran vor, die nach rasterelektronenmikroskopischen Studien eine poröse Deckschicht aufweist.

Beispiel 7

20 g des Sulfonierungsproduktes von Beispiel 4, das gemäß EP-A 0 575 801 hergestellt wurde (Ionenaustauscheräquivalent 1,4 mmol $H^{\oplus}$/g), werden in 100 ml NMP gelöst. Die Lösung wird auf einer Glasplatte zu einem Film homogener Dicke ausgerakelt und im Umluftofen bei 80°C getrocknet. Der so erhaltene Film ist 100 µm dick. Die Membran wird mit einer Lösung besprüht, die aus 16 g des eingangs erwähnten Polymers, 4 g eines Polyethersulfons (Ultrason E 1 000) und 80 g NMP besteht, so daß eine 100 µm dicke Deckschicht entsteht. Anschließend wird die Membran in eine Mischung aus 70 % Wasser und 30 % NMP getaucht und dort 10 min belassen. Die Membran weist nach rasterelektronenmikroskopischen Studien nun eine poröse Deckschicht auf. Es wird weiter wie in Beispiel 2 verfahren.

Beispiel 8

Es wird wie in Beispiel 3 verfahren, jedoch wird die geschichtete Membran nicht mit Aktivkohle bestreut, sondern stattdessen direkt in Wasser eingetaucht, in dem (im Unterschied zu Beispiel 3) Aktivkohle suspendiert ist. Dadurch ergibt sich ebenfalls eine abrasionsfeste Kohlenstoffbelegung.

Beispiel 9

Es wird wie in Beispiel 3 verfahren, jedoch wird anstelle von Aktivkohle Platin/Kohle (10 Gew.-% Platin, Firma Heraeus) verwendet. Man erhält so eine platinierte Membran, an deren Oberfläche der Katalysator in zwei unterschiedlichen morphologischen Formen vorliegt.

Beispiel 10

20 g des Sulfonierungsproduktes von Beispiel 4, das gemäß EP-A 0 575 801 hergestellt wurde (Ionenaustauscheräquivalent 1,4 mmol $H^{\oplus}$/g), werden in 100 ml NMP gelöst. Die Lösung wird auf einer Glasplatte zu einem Film homogener Dicke ausgerakelt und im Umluftofen bei 80°C getrocknet. Der so erhaltene Film ist 100 µm dick. Die Membran wird mit einer 20 %igen Lösung des eingangs erwähnten Polymers besprüht, so daß eine 100 µm dicke Deckschicht entsteht. Anschließend wird die Membran in Isopropanol getaucht und dort 10 min belassen. Es entsteht eine offenporige Deckschicht, deren Morphologie vom Fachmann als "mikroporös" bezeichnet wird. Die Poren weisen überwiegend einen Durchmesser von 0,1 µm bis 1,0 µm auf. Das Material, das die Poren umgibt, besteht aus zusammenhängenden kugelförmigen Aggregaten, deren Durchmesser überwiegend zwischen 0,1 µm und 0,5 µm liegt.

**Patentansprüche**

**1.** Membran-Elektroden-Verbund umfassend eine Membran, die einen polymeren Kationenaustauscher mit Carbonsäure-, Phosphonsäure- oder Sulfonsäuregruppen enthält, der in einem Lösungsmittel löslich ist, und auf der mindestens auf einer Seite in fein verteilter Form Metalle aufgebracht sind, die die Bildung von Wasser aus $H_2$ und $O_2$ katalysieren, dadurch gekennzeichnet, daß die Membran durch ein Phaseninversionsverfahren mit einer porösen Oberfläche versehen wurde, wobei die Membran nicht durchgängig, sondern nur oberflächlich porös ist, das Polymer des Kationenaustauschermaterials in einem aprotisch-polaren Lösungsmittel löslich ist und Einheiten der Formel $[Ar^1X]$ und $[Ar^2Y]$ enthält, die mindestens teilweise durch Sulfonsäuregruppen substituiert sind, wobei $Ar^1$ und $Ar^2$ gleiche oder verschiedene zweiwertige Arylenreste, X Sauerstoff oder Schwefel und Y einen Carbonyl-, Sulfoxid- oder Sulfonylrest bedeuten und der mit Metall bedeckte Teil der Membran porös ist, jedoch keine geschlossenen Poren enthält, und daß das Metall auch in den Poren vorliegen kann.

**2.** Membran-Elektroden-Verbund gemäß Anspruch 1, dadurch gekennzeichnet, daß das fein verteilte Metall mindestens auf einer Seite der Membran aus Metallen der Platingruppe besteht.

**3.** Membran-Elektroden-Verbund gemäß Anspruch 2, dadurch gekennzeichnet, daß das feinverteilte Metall Platin ist.

**4.** Membran-Elektroden-Verbund gemäß Anspruch 1, dadurch gekennzeichnet, daß das Polymer auch zweiwertige Reste der Formel $Ar^3$-$C(CH_3)_2$-, $Ar^3$-C$(CF_3)_2$-, $Ar^3$-C-(Phenyl)$_2$-, den Rest $Ar^3$-Cyclohexylen oder den Rest -$Ar^3$-Fluoren enthält, wobei $Ar^3$ eine aromatische Einheit bedeutet.

**5.** Membran-Elektroden-Verbund gemäß Anspruch 1, dadurch gekennzeichnet, daß das Polymer des Kationenaustauschermaterials zweiwertige N,N'-Pyromellitsäurediimid-Reste, Phthalsäureimid-Reste und/oder Benzimidazol-Reste enthält.

**6.** Membran-Elektroden-Verbund gemäß Anspruch 1, dadurch gekennzeichnet, daß die Reste $Ar^1$ und $Ar^2$ in der Zusammensetzung des Polymers fhr den Phenylen-Rest, insbesondere den 1,4-Phenylen-Rest, stehen.

**7.** Membran-Elektroden-Verbund gemäß einem der Ansprüche 1 bis 6, dadurch gekennzeichnet, daß die Ionenaustauscherkapazität der Membran 0,2 bis 3 mMol $H^+$/g beträgt.

**8.** Membran-Elektroden-Verbund gemäß einem der Ansprüche 1 bis 7, dadurch gekennzeichnet, daß die Sulfonsäuregruppen des Kationenaustauschermaterials mindestens teilweise als Kalium-, Rubidium-, Cäsium- oder Ammoniumsalz vorliegen.

**9.** Membran-Elektroden-Verbund gemäß einem der Ansprüche 1 bis 8, dadurch gekennzeichnet, daß das Polymer ein sulfoniertes aromatisches Polyetherketon, Polysulfon, Polyarylensulfid oder Polybenzimidazol darstellt.

**10.** Membran-Elektroden-Verbund gemäß Anspruch 1, dadurch gekennzeichnet, daß auf der Oberfläche der Membran neben den fein verteilten Metallen auch fein verteilte elektrisch leitfähige Kohlenstoffpartikel aufgebracht sind.

**11.** Membran-Elektroden-Verbund nach Anspruch 10, dadurch gekennzeichnet, daß auch die fein verteilten elektrisch leitfähigen Kohlenstoff-Partikel mit einem katalytisch aktiven Metall beladen sind, das die in Brennstoffzellen und Elektrolyseuren ablaufenden elektrochemischen Reaktionen katalysiert.

**12.** Membran-Elektroden-Verbund gemäß Anspruch 1, dadurch gekennzeichnet, daß das Membranmaterial mindestens teilweise in Mischung mit einem Polymer ohne anionische Gruppen vorliegt.

**13.** Membran-Elektroden-Verbund gemäß Anspruch 12, dadurch gekennzeichnet, daß das Polymer ohne anionische Gruppen ebenfalls in einem aprotisch-polaren Lösungsmittel löslich ist.

**14.** Membran-Elektroden-Verbund gemäß Anspruch 2, dadurch gekennzeichnet, daß die auf der Oberfläche aufgebrachte Menge an Platinmetall 0,001 bis 2 mg pro cm5 der Folie beträgt.

**15.** Verfahren zur Herstellung eines Membran-Elektroden-Verbundes gemäß Anspruch 1, dadurch gekennzeichnet, daß man auf eine Membran aus einem organischem Polymeren, das in einem aprotisch-polaren Lösungsmittel löslich ist und Einheiten der Formel [$Ar^1$X] und [$Ar^2$Y] enthält, wobei $Ar^1$ und $Ar^2$ gleiche oder verschiedene zweiwertige Arylen-Reste, die mindestens teilweise durch Carbonsäuregruppen, Phosphonsäuregruppen, Sulfonsäuregruppen oder Sulfonatgruppen substituiert sind, X Sauerstoff oder Schwefel und Y den Carbonylrest, Sulfoxidrest oder Sulfonylrest bedeuten, ein Lösungsmittel, einwirken läßt, so daß die Oberfläche angelöst wird, man anschließend mit einer Flüssigkeit behandelt, die mit dem Lösungsmittel mischbar ist, jedoch ein Nicht-Lösungsmittel für das Membranmaterial darstellt und so eine poröse Oberfläche erzeugt und dann auf der Oberfläche der Membran ein Metall, insbesondere Platin, abscheidet.

**16.** Verfahren nach Anspruch 15 zur Herstellung eines Membran-Elektroden-Verbund gemäß Anspruch 1, bei dem man eine Membran aus einem organischen polymeren Kationenaustauschermaterial, das Carbonsäure-, Phosphonsäure- oder Sulfonsäuregruppen enthält, auf mindestens einer Seite mit Platin beschichtet, dadurch gekennzeichnet, daß man die Membran durch ein Phaseninversionsverfahren mit einer porösen Oberfläche versieht, wobei das Polymer des KationenaustauscherMaterials in einem aprotisch-polaren Lösungsmittel löslich ist und Einheiten der Formel [$Ar^1$X] und [$Ar^2$Y] enthält, wobei $Ar^1$ und $Ar^2$ gleiche oder verschiedene zweiwertige Arylen-Reste, die mindestens teilweise durch Sulfonsäuregruppen substituiert sind, X Sauerstoff oder Schwefel und Y den Carbonylrest, Sulfoxidrest oder Sulfonylrest bedeuten, man die Folie mit der Lösung eines Reduktionsmittels fhr $H_2PtCl_6$ behandelt, man die Oberfläche durch Sphlen von anhaftendem Reduktionsmittel befreit und man dann die Folie in eine Lösung von $H_2PtCl_6$ verbringt, so daß sich an ihrer Oberfläche Platin abscheidet.

**17.** Verfahren nach Anspruch 15 zur Herstellung eines Membran-Elektroden-Verbund gemäß Anspruch 8, dadurch gekennzeichnet, daß man eine Membran aus einem organischen polymeren Kationenaustauschermaterial erzeugt, das in einem aprotisch-polaren. Lösungsmittel löslich ist und Einheiten der

Formel [$Ar^1X$] und [$Ar^2Y$] enthält, wobei X Sauerstoff oder Schwefel und Y den Carbonylrest, Sulfoxidrest oder Sulfonylrest und $Ar^1$ und $Ar^2$ gleiche oder verschiedene zweiwertige Arylenreste bedeuten, die mindestens teilweise durch Sulfonsäuregruppen substituiert sind, man die Membran durch ein Phaseninversionsverfahren mit einer porösen Oberfläche versieht und man die erhaltene Membran mit poröser Oberfläche mit einer wäßrigen Lösung eines, Kalium-, Rubidium-, Cäsium- oder Ammoniumsalzes behandelt und das Membranmaterial so mindestens teilweise in das Kalium-, Rubidium-, Cäsium- oder Ammoniumsalz umwandelt, man die Membran mindestens auf einer Seite mit einer Lösung von $H_2PtCl_6$ behandelt und dabei ein schwer lösliches Hexachloroplatinat auf den Oberflächen abscheidet, man die Membran sphlt und auf sie ein Reduktionsmittel fhr Chloroplatinat-Ionen einwirken läßt, so daß sich auf der Oberfläche der Membran festhaftende Aggregate von Platin bilden.

**18.** Verfahren nach Anspruch 15 zur Herstellung eines Membran-Elektroden-Verbundes gemäß Anspruch 3, dadurch gekennzeichnet, daß man eine Membran aus einem organischen Polymeren, das in einem aprotisch-polaren Lösungsmittel löslich ist und Einheiten der Formel [$Ar^1X$] und [$Ar^2Y$] enthält, wobei $Ar^1$ und $Ar^2$ gleiche oder verschiedene zweiwertige Arylen-Reste, die mindestens teilweise durch Sulfonsäuregruppen substituiert sind, X Sauerstoff oder Schwefel und Y den Carbonylrest, Sulfoxidrest oder Sulfonylrest bedeuten, durch ein Phaseninversionsverfahren mit einer porösen Oberfläche versieht und die Membran mindestens auf einer Seite mit einer Lösung von $H_2PtCl_6$ behandelt, man die Oberfläche der Membran durch Sphlen von oberflächlich anhaftender $H_2PtCl_6$ befreit und man auf die Membran ein Reduktionsmittel fhr Chloroplatinat-Ionen einwirken läßt, so daß sich mindestens auf einer Seite der Membran metallisches Platin abscheidet.

**19.** Verfahren nach einem der Ansprüche 15 bis 18, dadurch gekennzeichnet, daß man als Membranmaterial eine Mischung aus sulfonierten Polymer mit einem Polymer ohne anionische Gruppen einsetzt.

**20.** Verfahren nach einem der Ansprüche 15, 17 oder 18, dadurch gekennzeichnet, daß man auf eine nicht-metallisierte Membran eine Lösung eines zweiten sulfonierten Polymers in einem Lösungsmittel einwirken läßt, das Einheiten der Formel [$Ar^3X$] und [$Ar^4Y$] enthält, wobei $Ar^3$ und $Ar^4$ gleiche oder verschiedene zweiwertige Arylenreste, die mindestens teilweise Sulfonsäuregruppen aufweisen, X Sauerstoff oder Schwefel und Y die Carbonyl-, Sulfoxid- oder Sulfonylgruppe bedeutet, und anschließend die Membranoberfläche mit einer Flhssigkeit behandelt, die mit dem Lösungsmittel für das Polymer mischbar ist und in der das zweite sulfonierte Polymer unlöslich ist, so daß eine poröse Oberfläche entsteht und man anschließend die Membran metallisiert.

**21.** Verfahren nach Anspruch 20, dadurch gekennzeichnet, daß das Kationenaustauschermaterial der Membran und das zweite sulfonierte Polymer identisch sind.

**22.** Verfahren nach Anspruch 20, dadurch gekennzeichnet, daß die Lösung des zweiten sulfonierten Polymers in dem Lösungsmittel auch ein nichtsulfoniertes Polymer enthält.

**23.** Verfahren nach einem der Ansprüche 15, 17, 18 oder 20, dadurch gekennzeichnet, daß als Nicht-Lösungsmittel für das zweite sulfonierte Polymer Wasser, gegebenenfalls in Mischung mit einem polar-aprotischen Lösungsmittel, oder ein aliphatischer Alkohol, verwendet wird.

**24.** Verfahren nach Anspruch 15, 17, 18 oder 20, dadurch gekennzeichnet, daß man nach dem Anlösen der Oberfläche der Folie durch das Lösungsmittel auf die Membran fein verteilten elektrisch leitfähigen Kohlenstoff aufträgt und anschließend mit einem zweiten Lösungsmittel spült oder besprüht, das mit dem Lösungsmittel für die Membran mischbar ist, das aber ein Nicht-Lösungsmittel für das Material der Membran darstellt und so eine poröse Oberfläche erzeugt, in die Kohlenstoff eingearbeitet ist.

**25.** Verfahren nach einem der Ansprüche 15, 17, 18 oder 20, dadurch gekennzeichnet, daß das die Membran anlösende Lösungsmittel in suspendierter Form fein verteilten, elektrisch leitfähigen Kohlenstoff enthält.

**26.** Verfahren nach einem der Ansprüche 24 oder 25, dadurch gekennzeichnet, daß der elektrisch leitfähige Kohlenstoff mit einem Metall beladen ist, das die in Brennstoffzellen und Elektrolyseuren ablaufenden elektrochemischen Reaktionen katalysiert.

**27.** Verwendung des Membran-Elektroden-Verbundes gemäß Anspruch 1 in elektrochemischen Zellen, insbesondere als Membran/Elektroden-Einheit in Brennstoffzellen und Elektrolyseuren.

**Claims**

**1.** A membrane/electrode composite comprising a membrane comprising a polymeric cation exchanger containing carboxylic acid, phosphonic acid or

sulfonic acid groups, which cation exchanger is soluble in a solvent, where on at least one side of the membrane there are applied finely divided metals which catalyze the formation of water from $H_2$ and $O_2$, wherein the membrane was provided with a porous surface by means of a phase-inversion process, the membrane being porous not right through, but only on the surface, the polymer of the cation-exchange material is soluble in an aprotic-polar solvent and comprises units of the formulae [$Ar^1X$] and [$Ar^2Y$] which are substituted at least partially by sulfonic acid groups, where $Ar^1$ and $Ar^2$ are identical or different divalent arylene radicals, X is oxygen or sulfur and Y is a carbonyl, sulfoxide or sulfonyl radical and the part of the membrane covered with metal is porous, but contains no closed pores, and the metal can also be present in the pores.

2. A membrane/electrode composite as claimed in claim 1, wherein the finely divided metal comprises, at least on one side of the membrane, metals of the platinum group.

3. A membrane/electrode composite as claimed in claim 2, wherein the finely divided metal is platinum.

4. A membrane/electrode composite as claimed in claim 1, wherein the polymer also contains divalent radicals of the formula $Ar^3$-$C(CH_3)_2$-, $Ar^3$-$C(CF_3)_2$-, $Ar^3$-C-(phenyl)$_2$-, the radical $Ar^3$-cyclohexylene or the radical -$Ar^3$-fluorene, where $Ar^3$ is an aromatic unit.

5. A membrane/electrode composite as claimed in claim 1, wherein the polymer of the cation-exchange material contains divalent N,N'-pyromellitic diimide radicals, phthalimide radicals and/or benzimidazole radicals.

6. A membrane/electrode composite as claimed in claim 1, wherein the radicals $Ar^1$ and $Ar^2$ in the composition of the polymer are the phenylene radical, in particular the 1,4-phenylene radical.

7. A membrane/electrode composite as claimed in any one of claims 1 to 6, wherein the ion exchange capacity of the membrane is from 0.2 to 3 mmol of $H^+$/g.

8. A membrane/electrode composite as claimed in any one of claims 1 to 7, wherein the sulfonic acid groups of the cation-exchange material are present at least partially as potassium, rubidium, cesium or ammonium salt.

9. A membrane/electrode composite as claimed in any one of claims 1 to 8, wherein the polymer is a sulfonated aromatic polyether ketone, polysulfone, polyarylene sulfide or polybenzimidazole.

10. A membrane/electrode composite as claimed in claim 1, wherein finely divided electrically conductive carbon particles are also applied to the surface of the membrane in addition to the finely divided metals.

11. A membrane/electrode composite as claimed in claim 10, wherein the finely divided electrically conductive carbon particles are also loaded with a catalytically active metal which catalyzes the electrochemical reactions proceeding in fuel cells and electrolyzers.

12. A membrane/electrode composite as claimed in claim 1, wherein the membrane material is present at least partially in admixture with a polymer without anionic groups.

13. A membrane/electrode composite as claimed in claim 12, wherein the polymer without anionic groups is likewise soluble in an aprotic-polar solvent.

14. A membrane/electrode composite as claimed in claim 2, wherein the amount of platinum metal applied to the surface is from 0.001 to 2 mg per $cm^2$ of the film.

15. A process for producing a membrane/electrode composite as claimed in claim 1, which comprises allowing a solvent to act on a membrane of an organic polymer which is soluble in an aprotic-polar solvent and comprises units of the formulae [$Ar^1X$] and [$Ar^2Y$], where $Ar^1$ and $Ar^2$ are identical or different divalent arylene radicals which are at least partially substituted by carboxylic acid groups, phosphonic acid groups, sulfonic acid groups or sulfonate groups, X is oxygen or sulfur and Y is the carbonyl radical, sulfoxide radical or sulfonyl radical, so that the surface is partially dissolved, subsequently treating it with a liquid which is miscible with the solvent but is not a solvent for the membrane material and thus producing a porous surface and then depositing a metal, in particular platinum, on the surface of the membrane.

16. The process as claimed in claim 15 for producing a membrane/electrode composite as claimed in claim 1, in which a membrane comprising an organic polymeric cation-exchange material containing carboxylic acid, phosphonic acid or sulfonic acid groups is coated on at least one side with platinum, wherein the membrane is provided with a porous surface by means of a phase-inversion process, where the polymer of the cation-exchange material is soluble in an aprotic-polar solvent and comprises

units of the formulae [$Ar^1X$] and [$Ar^2Y$], where $Ar^1$ and $Ar^2$ are identical or different divalent arylene radicals which are at least partially substituted by sulfonic acid groups, X is oxygen or sulfur and Y is the carbonyl radical, sulfoxide radical or sulfonyl radical, the film is treated with the solution of a reducing agent for $H_2PtCl_6$, the surface is freed of adhering reducing agent by rinsing and then the film is introduced into a solution of $H_2PtCl_6$, so that platinum deposits on its surface.

**17.** The process as claimed in claim 15 for producing a membrane/electrode composite as claimed in claim 8, wherein a membrane is produced from an organic polymeric cation-exchange material which is soluble in an aprotic-polar solvent and comprises units of the formulae [$Ar^1X$] and [$Ar^2Y$], where X is oxygen or sulfur and Y is the carbonyl radical, sulfoxide radical or sulfonyl radical and $Ar^1$ and $Ar^2$ are identical or different divalent arylene radicals which are at least partially substituted by sulfonic acid groups, the membrane is provided with a porous surface by means of a phase-inversion process and the membrane having a porous surface obtained is treated with an aqueous solution of a potassium, rubidium, cesium or ammonium salt and thus the membrane material is at least partially converted into the potassium, rubidium, cesium or ammonium salt, the membrane is treated on at least one side with a solution of $H_2PtCl_6$ and thus a sparingly soluble hexachloroplatinate is deposited on the surfaces, the membrane is rinsed and a reducing agent for chloroplatinate ions is allowed to act on it, so that firmly adhering aggregates of platinum form on the surface of the membrane.

**18.** The process as claimed in claim 15 for producing a membrane/electrode composite as claimed in claim 3, wherein a membrane of an organic polymer which is soluble in an aprotic-polar solvent and comprises units of the formulae [$Ar^1X$] and [$Ar^2Y$], where $Ar^1$ and $Ar^2$ are identical or different divalent arylene radicals which are at least partially substituted by sulfonic acid groups, X is oxygen or sulfur and Y is the carbonyl radical, sulfoxide radical or sulfonyl radical, is provided with a porous surface by means of a phase-inversion process and the membrane is treated on at least one side with a solution of $H_2PtCl_6$, the surface of the membrane is freed of $H_2PtCl_6$ adhering to the surface by rinsing and a reducing agent for chloroplatinate ions is allowed to act on the membrane, so that metallic platinum deposits on at least one side of the membrane.

**19.** The process as claimed in any one of claims 15 to 18, wherein the membrane material used is a mixture of sulfonated polymer with a polymer without anionic groups.

**20.** The process as claimed in any one of claims 15, 17 or 18, wherein a solution in a solvent of a second sulfonated polymer comprising units of the formulae [$Ar^3X$] and [$Ar^4Y$], where $Ar^3$ and $Ar^4$ are identical or different divalent arylene radicals having at least some sulfonic acid groups, X is oxygen or sulfur and Y is the carbonyl, sulfoxide or sulfonyl group, is allowed to act on a non-metallized membrane and the membrane surface is subsequently treated with a liquid which is miscible with the solvent for the polymer and in which the second sulfonated polymer is insoluble, so that a porous surface is formed, and the membrane is subsequently metallized.

**21.** The process as claimed in claim 20, wherein the cation-exchange material of the membrane and the second sulfonated polymer are identical.

**22.** The process as claimed in claim 20, wherein the solution of the second sulfonated polymer in the solvent also contains a non-sulfonated polymer.

**23.** The process as claimed in any one of claims 15, 17, 18 or 20, wherein the non-solvent for the second sulfonated polymer which is used is water, if desired in admixture with a polar-aprotic solvent, or an aliphatic alcohol.

**24.** The process as claimed in claim 15, 17, 18 or 20 wherein, after the partial dissolution of the surface of the film by the solvent, finely divided electrically conductive carbon is applied to the membrane and the membrane is subsequently rinsed or sprayed with a second solvent which is miscible with the solvent for the membrane but is not a solvent for the material of the membrane, thus producing a porous surface into which carbon is incorporated.

**25.** The process as claimed in any one of claims 15, 17, 18 or 20, wherein the solvent partially dissolving the membrane contains finely divided, electrically conductive carbon in suspended form.

**26.** The process as claimed in either of claims 24 or 25, wherein the electrically conductive carbon is loaded with a metal which catalyzes the electrochemical reactions proceeding in fuel cells and electrolyzers.

**27.** The use of the membrane/electrode composite as claimed in claim 1 in electrochemical cells, in particular as membrane/electrode unit in fuel cells and electrolyzers.

## Revendications

**1.** Composite membrane-électrode comprenant une membrane, qui contient un échangeur de cations

polymère avec des groupes acide carboxylique, acide phosphorique ou acide sulfonique, qui est soluble dans un solvant, et sur laquelle on dépose sur au moins une face des métaux sous forme finement divisée, qui catalysent la formation d'eau à partir de $H_2$ et 02, caractérisé en ce que, la membrane a été munie d'une surface poreuse au moyen d'un procédé d'inversion de phase, par lequel la membrane n'est pas complètement poreuse mais seulement superficiellement, le polymère du matériau échangeur de cations est soluble dans un solvant polaire aprotique et contient des motifs de formules [$Ar^1X$] et [$Ar^2Y$], qui sont au moins partiellement substitués par des groupes acide sulfonique, formules dans lesquelles $Ar^1$ et $Ar^2$ représentent des groupes arylène divalents identiques ou différents, X représente un atome d'oxygène ou de soufre et Y un groupe carbonyle, sulfoxyde ou sulfonyle et la partie de la membrane recouverte avec du métal est poreuse, ne contient pourtant aucune porosité fermée, et en ce que le métal peut se trouver aussi dans les pores.

**2.** Composite membrane-électrode selon la revendication 1, caractérisé en ce que le métal finement divisé présent sur au moins une face de la membrane est constitué de métaux du groupe du platine.

**3.** Composite membrane-électrode selon la revendication 2, caractérisé en ce que le métal finement divisé est le platine.

**4.** Composite membrane-électrode selon la revendication 1, caractérisé en ce que le polymère contient également des groupes divalents de formule $Ar^3$-C$(CH_3)_2$-, $Ar^3$-C$(CF_3)_2$-, $Ar^3$-C(phényle)$_2$-, le groupe $Ar^3$-cyclohexylène ou le groupe $Ar^3$-fluorène, formules dans lesquelles $Ar^3$ représente un motif aromatique.

**5.** Composite membrane-électrode selon la revendication 1, caractérisé en ce que le polymère du matériau échangeur de cations contient des groupes N,N'-acide pyromellique-diimide, phtalimide et/ou benzimidazole.

**6.** Composite membrane-électrode selon la revendication 1, caractérisé en ce que les groupes $Ar^1$ et $Ar^2$ dans la composition du polymère représentent le radical phénylène, en particulier le radical 1,4-phénylène.

**7.** Composite membrane-électrode selon l'une des revendications 1 à 6, caractérisé en ce que la capacité de l'échangeur d'ions de la membrane est de 0,2 jusqu'à 3 mmol $H^+$/g.

**8.** Composite membrane-électrode selon l'une des revendications 1 à 7, caractérisé en ce que les groupes acide sulfonique du matériau échangeur de cations se présentent au moins partiellement sous la forme de sel de potassium, rubidium, césium ou d'ammonium.

**9.** Composite membrane-électrode selon l'une des revendications 1 à 8, caractérisé en ce que le polymère représente une polyéthercétone, une polysulfone, un polysulfure d'arylène ou un polybenzimidazole sulfoné.

**10.** Composite membrane-électrode selon la revendication 1, caractérisé en ce qu'on dépose sur la surface de la membrane en plus des métaux finement divisés également des particules de carbone finement divisées électriquement conductrices.

**11.** Composite membrane-électrode selon la revendication 10, caractérisé en ce que les particules de carbone finement divisées électriquement conductrices sont chargées avec un métal catalytiquement actif, qui catalyse les réactions électrochimiques ayant lieu dans des piles à combustible et des cellules d'électrolyse.

**12.** Composite membrane-électrode selon la revendication 1, caractérisé en ce que le matériau de la membrane se présente au moins partiellement en mélange avec un polymère sans groupes anioniques.

**13.** Composite membrane-électrode selon la revendication 12, caractérisé en ce que le polymère sans groupes anioniques est également soluble dans un solvant polaire aprotique.

**14.** Composite membrane-électrode selon la revendication 2, caractérisé en ce que la quantité de platine métal déposée sur la surface est de 0,001 jusqu'à 2 mg par $cm^2$ de la feuille.

**15.** Procédé de préparation d'un composite membrane-électrode selon la revendication 1, caractérisé en ce que l'on fait réagir un solvant sur une membrane constituée d'un polymère organique, qui est soluble dans un solvant polaire aprotique et contient des motifs de formules [$Ar^1X$] et [$Ar^2Y$], formules dans lesquelles $Ar^1$ et $Ar^2$ représentent des groupes arylène divalents identiques ou différents, qui sont au moins partiellement substitués par des groupes acide carboxylique, des groupes acide phosphorique, des groupes acide sulfonique ou des groupes sulfonate, X représente un atome d'oxygène ou de soufre et Y le groupe carbonyle, le groupe sulfoxyde ou le groupe sulfonyle, de manière à ce que la surface soit attaquée chimiquement, on la traite ensuite avec un liquide qui est miscible avec le solvant,

mais représente un non-solvant pour le matériau de la membrane et on produit ainsi une surface poreuse et on dépose sur la surface de la membrane un métal, en particulier du platine.

**16.** Procédé selon la revendication 15 pour la préparation d'un composite membrane-électrode selon la revendication 1, dans lequel on dépose du platine sur au moins une face d'une membrane constituée d'une matière organique polymère échangeuse de cations, qui contient des groupes acide carboxylique, acide phosphonique ou acide sulfonique, caractérisé en ce que, l'on munit la membrane d'une surface poreuse au moyen d'un procédé d'inversion de phase, dans lequel le polymère du matériau échangeur de cations est soluble dans un solvant polaire aprotique et contient des motifs de formules $[Ar^1X]$ et $[Ar^2Y]$, dans lesquelles $Ar^1$ et $Ar^2$ représentent des groupes arylène divalents identiques ou différents, qui sont au moins partiellement substitués par des groupes acide sulfonique, X représente un atome d'oxygène ou de soufre et Y le groupe carbonyle, sulfoxyde ou sulfonyle, on traite la feuille avec la solution d'un agent réducteur pour $H_2PtCl_6$, on élimine l'agent réducteur adhérent à la surface par lavage et on fait passer ensuite la feuille dans une solution de $H_2PtCl_6$, de manière à ce que du platine se dépose à sa surface.

**17.** Procédé selon la revendication 15 pour la préparation d'un composite membrane-électrode selon la revendication 8, caractérisé en ce que, l'on fabrique une membrane à partir d'un matériau organique polymère échangeur de cations, qui est soluble dans un solvant polaire aprotique et contient des motifs de formules $[Ar^1X]$ et $[Ar^2Y]$, dans lesquelles X représente un atome d'oxygène ou de soufre et Y le groupe carbonyle, le groupe sulfoxyde ou le groupe sulfonyle et $Ar^1$ et $Ar^2$ représentent des groupes arylène divalents identiques ou différents, qui sont au moins partiellement substitués par des groupes acide sulfonique, on munit la membrane d'une surface poreuse au moyen d'un procédé d'inversion de phase et on traite la membrane obtenue avec une surface poreuse avec une solution aqueuse d'un sel de potassium, rubidium, césium ou d'ammonium et on transforme au moins partiellement le matériau de la membrane en un sel de potassium, rubidium, césium ou d'ammonium, on traite la membrane sur au moins une face avec une solution de $H_2PtCl_6$ et on dépose ainsi sur les surfaces un hexachloroplatinate peu soluble, on rince la membrane et on laisse agir sur celle-ci un agent réducteur pour les ions chloroplatinate, de manière à ce que des agrégats de platine fortement adhérents se déposent sur la surface de la membrane.

**18.** Procédé selon la revendication 15 pour la préparation d'un composite membrane-électrode selon la revendication 3, caractérisé en ce que, l'on fabrique une membrane à partir polymère organique, qui est soluble dans un solvant polaire aprotique et contient des motifs de formules $[Ar^1X]$ et $[Ar^2Y]$, dans lesquelles $Ar^1$ et $Ar^2$ représentent des groupes arylène divalents identiques ou différents, qui sont au moins partiellement substitués par des groupes acide sulfonique, X représente un atome d'oxygène ou de soufre et Y le groupe carbonyle, le groupe sulfoxyde ou le groupe sulfonyle, on munit la membrane d'une surface poreuse au moyen d'un procédé d'inversion de phase et on traite la membrane sur au moins une face avec une solution de $H_2PtCl_6$, on libère la surface de la membrane par rinçage du $H_2PtCl_6$ adhérent en surface et on laisse agir sur la membrane un agent réducteur pour les ions chloroplatinate, de manière à ce que du platine métallique se dépose sur au moins une face de la membrane.

**19.** Procédé selon l'une des revendications 15 à 18, caractérisé en ce qu'on utilise comme matériau de membrane un mélange de polymère sulfoné avec un polymère sans groupes anioniques.

**20.** Procédé selon l'une des revendications 15, 17 ou 18, caractérisé en ce que l'on fait agir sur une membrane non métallisée une solution dans un solvant d'un deuxième polymère sulfoné, qui contient des motifs de formules $[Ar^3X]$ et $[Ar^4Y]$, dans lesquelles $Ar^3$ et $Ar^4$ représentent des groupes arylène divalents identiques ou différents, qui présentent au moins partiellement des groupes acide sulfonique, X représente un atome d'oxygène ou de soufre et Y le groupe carbonyle, sulfoxyde ou sulfonyle, et on traite ensuite la surface de la membrane avec un liquide, qui est miscible avec le solvant pour le polymère et dans lequel le deuxième polymère sulfoné est insoluble, de sorte qu'il en résulte une surface poreuse et on métallise ensuite la membrane.

**21.** Procédé selon la revendication 20, caractérisé en ce que le matériau échangeur de cations de la membrane et le deuxième polymère sulfoné sont identiques.

**22.** Procédé selon la revendication 20, caractérisé en ce que la solution du deuxième polymère sulfoné contient dans le solvant encore un polymère non sulfoné.

**23.** Procédé selon l'une des revendications 15, 17, 18 ou 20, caractérisé en ce qu'on utilise comme non-solvant pour le deuxième polymère sulfoné, l'eau, éventuellement en mélange avec un solvant polaire aprotique, ou un alcool aliphatique.

**24.** Procédé selon la revendication 15, 17, 18 ou 20, caractérisé en ce qu'après l'attaque chimique de la surface de la feuille au moyen du solvant, on dépose sur la membrane du carbone électriquement conducteur finement divisé et on rince ou on lave ensuite avec un deuxième solvant, qui est miscible avec le solvant pour la membrane, mais représente un non-solvant pour la matière de la membrane et on produit ainsi une surface poreuse, dans laquelle on introduit du carbone.

**25.** Procédé selon l'une des revendications 15, 17, 18 ou 20, caractérisé en ce que le solvant attaquant chimiquement la membrane contient sous forme d'une suspension du carbone électriquement conducteur, finement dispersé.

**26.** Procédé selon l'une des revendications 24 ou 25, caractérisé en ce que le carbone électriquement conducteur est chargé avec un métal qui catalyse les réactions électrochimiques se produisant dans les piles à combustible et les cellules d'électrolyse.

**27.** Utilisation du composite de membrane-électrode selon la revendication 1 dans des cellules électrochimiques, en particulier comme unité membrane/électrode dans les piles à combustibles et les cellules d'électrolyse.